# EUROPÄISCHE PATENTSCHRIFT

(11) **EP 1 252 422 B1**
(45) Veröffentlichungstag und Bekanntmachung des Hinweises auf die Patenterteilung: **01.03.2006**
(21) Anmeldenummer: 01957720.4
(22) Anmeldetag: 18.07.2001
(51) Int. Cl.: F02B 31/06

(54) **VERFAHREN ZUR DIAGNOSE DER VERSTELLVORRICHTUNG EINER DRALLKLAPPE**
METHOD FOR DIAGNOSING THE ACTUATION OF A REGULATING DEVICE FOR A SWIRL CONTROL VALVE
PROCEDE PERMETTANT DE DIAGNOSTIQUER UN DISPOSITIF DE REGLAGE POUR CLAPET DE COMMANDE D'INTENSITE DE TOURBILLON

(30) Priorität: 01.08.2000 DE 10037511
(43) Veröffentlichungstag der Anmeldung: 30.10.2002
(73) Patentinhaber: SIEMENS AKTIENGESELLSCHAFT, 80333 München (DE)
(72) Erfinder: GRAF, Johann, 93345 Hausen (DE); FROMM, Robert, 93093 Donaustauf (DE); HENN, Michael, 93059 Regensburg (DE); ZHANG, Hong, 93105 Tegernheim (DE)
(86) Internationale Anmeldenummer: PCT/DE2001/002682
(87) Internationale Veröffentlichungsnummer: WO 2002/010564

(56) Entgegenhaltungen:
- DE-A- 19 740 970
- US-A- 5 542 388
- US-A- 5 679 891
- PATENT ABSTRACTS OF JAPAN vol. 1996, no. 07, 31. Juli 1996 (1996-07-31) -& JP 08 074583 A (HITACHI LTD), 19. März 1996 (1996-03-19) in der Anmeldung erwähnt

## Beschreibung

Die Erfindung betrifft ein Verfahren zur Diagnose einer Drallklappenbetätigung,insbesondere zur Diagnose einer Drallklappen-Verstellvorrichtung, die ein die Position der Drallklappe anzeigendes Lagesignal abgibt.

Bei Brennkraftmaschinen wird zur Steuerung der Gemischbeladung eines Zylinders häufig eine sogenannte Drallklappe verwendet. Diese Drallklappe befindet sich stromab des Luftsammlers vor dem Einlaßventil und beeinflußt die Einströmverhältnisse der Ansaugluft, beispielsweise indem von zwei Einlaßkanälen eines Zylinders einer mehr oder weniger verschlossen wird. Dadurch kann man beeinflussen, mit welchem Drall das angesaugte Gas in den Zylinder gelangt, woraus sich auch der Name "Drallklappe" erklärt. Jeder Zylinder verfügt über eine eigene Drallklappe; die Drallklappen sind durch ein Koppelgestänge verbunden, das von einer Verstellvorrichtung betätigt wird, die gleichzeitig ein Lagerückmeldungssignal abgibt, so daß ein Steuergerät Kenntnis über die aktuelle Lage der Drallklappen hat. Dies ist nicht zuletzt deshalb notwendig, da viele der bei modernen Brennkraftmaschinen zur Steuerung verwendeten Kennfelder auch die Stellung der Drallklappe berücksichtigen.

Es ist deshalb notwendig, die Funktion der Drallklappenbetätigung zu überprüfen, nicht zuletzt deshalb, da es sich um ein emissionsrelevantes Bauteil handelt, das nach gesetzgeberischer Vorschrift im Betrieb einer Brennkraftmaschine einer ständigen Überprüfung zu unterziehen ist.

Bislang war es zur Überprüfung einer Drallklappe üblich, einen zweiten, d.h. redundanten, die Lage der Drallklappe abfühlenden Sensor vorzusehen, um korrekte Funktion der Drallklappenbetätigung und dabei insbesondere die Aktivität der Verstellvorrichtung und das Lagesignal der Lagerückmeldung überprüfen zu können, vgl z.B. DE 198 60 323 A1. Solche Redundanz ist jedoch kostenträchtig, insbesondere, da man zur Kontrolle des Koppelgestänges einen separaten Sensor an jeder Drallklappe braucht.

Aus der JP 08074583 A ist ein Verfahren zur Diagnose einer Drallklappe, die stromab einer Drosselklappe im Ansaugtrakt einer Brennkraftmaschine sitzt, bekannt, bei dem nach einer Verstellung der Drallklappe der Öffnungsgrad der Drallklappe direkt oder indirekt, beispielsweise durch einen Drucksensor stromab der Drallklappe, erfasst, das hierbei erhaltene Drucksignal mit einem gespeicherten Sollwert verglichen und aus diesem Vergleich ein Defekt der Drallklappe diagnostiziert wird. Unter welchen Betriebsbedingungen diese Diagnose durchgeführt werden soll, lässt sich dieser Druckschrift nicht entnehmen.

Der Erfindung liegt die Aufgabe zugrunde, ein Verfahren zur Diagnose einer Drallklappenbetätigung anzugeben, bei dem keine redundanten Lagesensoren benötigt werden.

Diese Aufgabe wird durch das in Anspruch 1 beschriebene Verfahren gelöst.

Der Erfindung liegt die Erkenntnis zugrunde, daß in einem ganz bestimmten Betriebsbereich des Saugrohrdruckes einer Brennkraftmaschine ein Verstellvorgang der Drallklappe zu einer bestimmten Saugrohrdruckänderung führt. Verstellt man die Drallklappe um einen bestimmten Verstellweg, beispielsweise bis in eine bestimmte Endposition, so ergibt sich ein bestimmter Saugrohrdrucksprung. Die Drallklappenverstellung bleibt ohne Auswirkung auf die Last der Brennkraftmaschine, wenn sie sich im überkritischen Betriebsbereich des Saugrohrdruckes befindet, da dann der angesaugte Luftmassenstrom drallklappenverstellungsunabhängig ist.

Gemäß der Erfindung erfolgt die Verstellung der Drallklappe deshalb nur bei überkritischem Saugrohrdruck. Dieser überkritische Bereich ist dem Fachmann an und für sich bekannt. Er ist dann gegeben, wenn der Saugrohrdruck stromab der Drosselklappe kleiner als etwa 55 % des Umgebungsdruckes ist. Liegt der Druck in diesem überkritischen Bereich, führt ein Verstellen der Drallklappe nicht zu einem Lastsprung.

Bleibt der Saugrohrdrucksprung bei einer Drallklappenverstellung aus, ist entweder der Verstellmechanismus oder die Lagerückmeldung fehlerhaft. Somit ermöglicht das erfindungsgemäße Verfahren auf einfache Weise mittels ohnehin vorhandener Meßaufnehmer - der Saugrohrdruck wird in einer Brennkraftmaschine üblicherweise erfaßt - eine Diagnose der Betätigung der Drallklappe.

Das erfindungsgemäße Verfahren hat insbesondere den Vorteil, daß in beiden Druckmessungen, d.h. in der Saugrohrdruckmessung enthaltene Meßfehler durch die Differenzbildung herausfallen.

Natürlich ist die Diagnose dann besonders sicher, wenn der Drucksprung groß ausfällt. Dazu ist es möglich, innerhalb des überkritischen Bereiches einen besonderen Bereich einzuengen, bei dem der Drucksprung besonders groß ausfällt. Auch kann man einen möglichst großen Drallklappenverstellweg verwenden, da der Saugrohrdrucksprung vom bei der Betätigung erfolgenden Verstellweg der Drallklappe abhängt.

In einer Weiterbildung dieser vorteilhaften Ausgestaltung kann man vor einem für eine Diagnose gedachten Drallklappenverstellvorgang zuerst die aktuelle Position der Drallklappe ermitteln und dann die in der Diagnoseverstellung vorgesehene bestimmte Endposition so wählen, daß sich aus der aktuellen Position heraus ein maximaler Verstellweg ergibt.

Eine weitere Verbesserung der Diagnose erhält man dadurch, daß man sie mehrfach hintereinander ausführt. Da für eine bestimmte Betriebsphase einer Brennkraftmaschine in der Regel eine ganz bestimmte Drallklappenposition gewünscht ist, kann man eine doppelte Ausführung der Diagnose besonders bevorzugt dadurch erreichen, daß man aus der vom Steuergerät vorgegebenen Sollposition einmal die Verstellung in eine bestimmte Endposition für eine erste Diagnose und dann die Rückstellung in die Sollposition für eine zweite Diagnose ausnützt. Damit werden zwei Vorteile erreicht, zum einen wird bis auf die Zeitdauer der Diagnose genau die vom Steuergerät gewünschte Sollposition für die Drallklappe beibehalten, zum anderen werden gleichzeitig zwei gegengleiche Drallklappenverstellungen durchgeführt, die für eine Diagnose ausgenutzt werden können.

Natürlich möchte man Diagnosen grundsätzlich so unmerklich wie möglich ablaufen lassen. Es ist deshalb besonders zu bevorzugen, wenn eine Diagnose im normalen Betrieb auftretende Signale oder Verstellungen ausnutzt. Es ist deshalb besonders zu bevorzugen, die für die Diagnose nötige Verstellung der Drallklappe mit einer im Betrieb der Brennkraftmaschine ohnehin angeforderten Drallklappenbetätigung zusammenfallenzulassen. Dies erlaubt es, einen ohnehin nötigen Drallklappenverstellweg für die Diagnose auszunutzen, wobei in einer vorteilhaften Weiterbildung man die Diagnose nur dann durchführt, wenn ein gewisser Mindestverstellweg erreicht wird. In einer Abwandlung dieser normale Betriebsbetätigungen der Drallklappe ausnutzenden Weiterbildung kann eine im normalen Betrieb der Brennkraftmaschine vom Steuergerät angeforderte Verstellung der Drallklappe auch ausgenutzt werden, indem der eigentlich angeforderte Verstellweg so geeignet vergrößert wird, daß ein bestimmter geeigneter Mindestverstellweg erreicht wird, falls der vom Steuergerät eigentliche angeforderte Verstellweg für eine sichere Diagnose nicht genügt. In dieser Weiterbildung wird die Drallklappe also über eine im normalen Betrieb angeforderte Endposition hinaus verstellt, bis der für die Diagnose erforderliche Mindestverstellweg erreicht ist.

Alternativ kann man einen für die Diagnose erforderlichen Mindestverstellweg auch dadurch gewährleisten, daß die Diagnose nur ausgelöst wird, wenn sich die Drallklappe innerhalb eines gewissen Bereiches nahe ihrer minimalen oder maximalen Öffnung befindet. Dies kann beispielsweise aus dem Lagesignal zu erkennen sein. Betätigt man die Drallklappe dann aus dieser minimalen oder maximalen Öffnung weg in Richtung der entgegengesetzten Endposition, erreicht man einen maximalen Verstellweg, und damit einen maximalen Drucksprung im Saugrohr.

Vorteilhafte Weiterbildungen der Erfindung sind Gegenstand der Unteransprüche. Die Erfindung wird nachfolgend unter Bezugnahme auf die Zeichnung in einem Ausführungsbeispiel näher erläutert. In der Zeichnung zeigt:
Figur 1 ein Blockschaltbild einer Vier-Zylinderbrennkraftmaschine mit Drallklappen für jeden Zylinder,
Figur 2 ein unmittelbar vor den Einlaßventilen der Brennkraftmaschine der Figur 1 angeordnetes Einlaßmodul mit den Drallklappen,
Figur 3 eine Zeitreihe des Saugrohrdruckes während einer Diagnose und
Figuren 4, 5 und 6 Flußdiagramme eines Diagnoseablaufes.

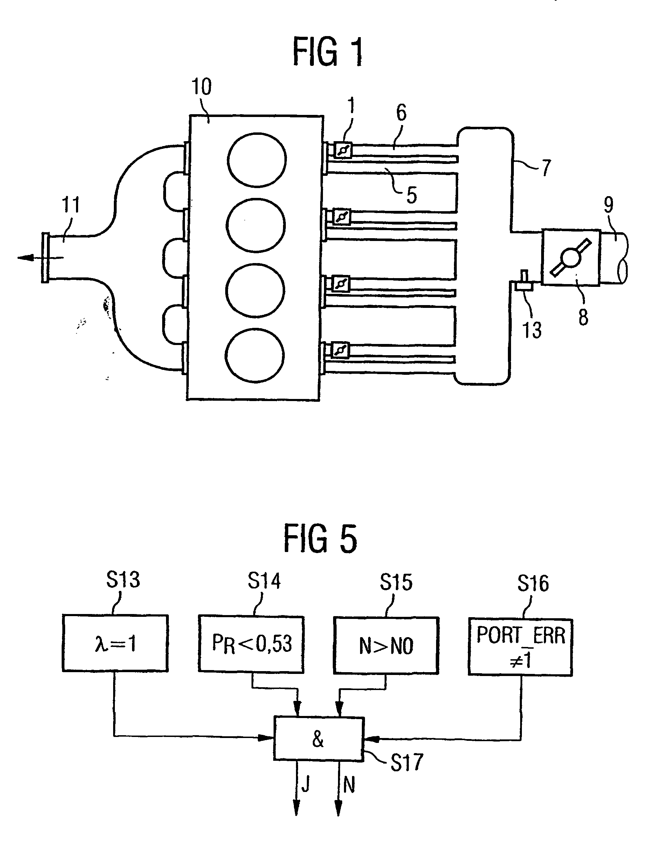

Figur 1 zeigt in schematischer Darstellung eine fremdgezündete Brennkraftmaschine 10 mit vier Zylindern, wobei es im folgenden auf die Zylinderzahl nicht ankommt. Die Brennkraftmaschine 10 hat einen Auspuffkrümmer 11, der die Abgase aus den Zylindern aufnimmt und ein Ansaugrohr 9, durch das sie die für die Verbrennung nötige Luft ansaugt. Stromab des Ansaugrohres 9 befindet sich eine Drosselklappe 8, mittels der im Lambda-1-geregelten Betrieb der Brennkraftmaschine die Last gesteuert wird. Stromab der Drosselklappe 8 liegt der Luftsammler 7, der sich für jeden Zylinder in zwei Teilansaugkanäle 5, 6 aufteilt und in dem ein Saugrohr-Druckaufnehmer 13 den Absolutdruck erfaßt.

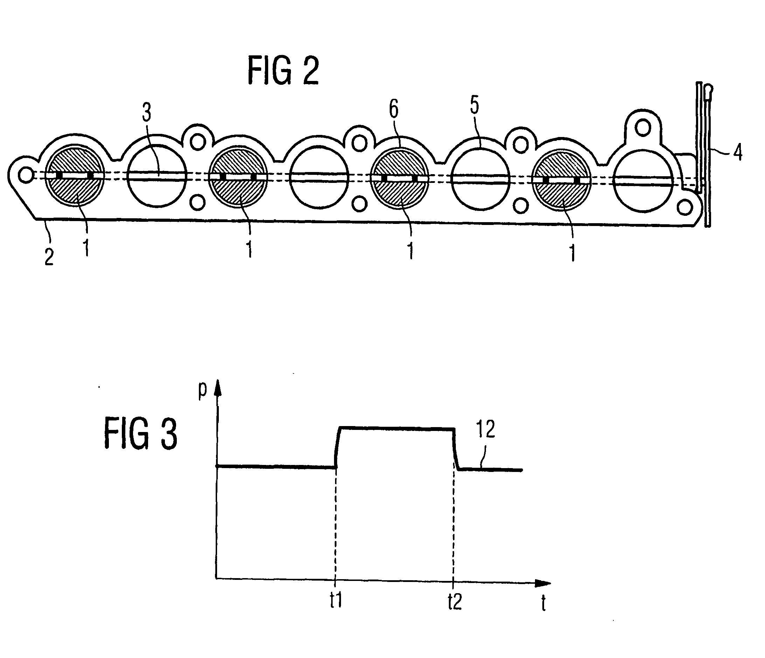

Die Teilansaugkanäle 5 und 6 münden über ein in Figur 2 dargestelltes Flanschteil in die Kanäle zu den Einlaßventilen. Dabei befindet sich in jedem Teilansaugkanal 6 eine Drallklappe 1.

Diese im Flanschteil 2 sitzende Drallklappe 1 kann den jeweiligen Teilansaugkanal 6 beliebig verschließen. Die Drallklappen 1 sitzen dazu auf einem als Welle 3 ausgebildeten Koppelgestänge, das von einem Stellantrieb 4 angetrieben wird. Eine Drehung der Welle 3 dreht die Drallklappen 1 und gibt somit die Teilansaugkanäle 6 mehr oder weniger frei. Der Stellantrieb 4 hat eine (nicht dargestellte) Lagerückmeldung und leitet das entsprechende Lagesignal an ein ihn ansteuerndes Steuergerät weiter, das der besseren Übersichtlichkeit halber ebenfalls nicht eingezeichnet ist.

Das vom Stellantrieb 4 abgegebene Lagesignal bzw. die Tätigkeit des Stellantriebs 4, das Koppelgestänge und damit die Betätigung der Drallklappe insgesamt kann nun überwacht werden, indem man den Stellantrieb und damit die Drallklappen 1 betätigt. Dies ist in Figur 3 zum Zeitpunkt t₁ dargestellt. Der Stellantrieb 4 wird solange betätigt, bis ein gewisser Mindestverstellweg der Drallklappen 1 erreicht wurde. Dadurch steigt Druck p im Saugrohr, was sich in der Kurve der Fig. 2 als ein Drucksprung zeigt. Die Höhe dieses Drucksprunges hängt vom Verstellweg ab. Dies ermöglicht eine Diagnose des Stellantriebs 4. Ergibt sich zum von der Lagerrückmeldung angezeigten Verstellweg nicht der entsprechende Drucksprung, ist entweder der Stellantrieb bzw. das Koppelgestänge oder die Lagerückmeldung defekt.

Um diese Drallklappenbetätigung ohne Auswirkungen auf die Last der Brennkraftmaschine 10 zu halten, erfolgt sie im überkritischen Bereich des Saugrohrdruckes, d.h. wenn der Saugrohrdruck kleiner 55 % des Umgebungsdruckes ist.

Um nach der für die Diagnose bewirkten Verstellung der Drosselklappen 1 wieder zur ursprünglichen Drallklappenposition zurückzukommen, die beispielsweise für den Betrieb der Brennkraftmaschine momentan gewünscht wird, kann man zu einem späteren Zeitpunkt die Drallklappen 1 mit dem Stellantrieb 4 wieder zurückstellen. Dies erfolgt in Figur 3 zum Zeitpunkt t₂. Es ergibt sich dann ein entsprechender Rücksprung des Saugrohrdruckes p auf den ursprünglichen Wert, wie in Kurve 12 zu sehen ist.

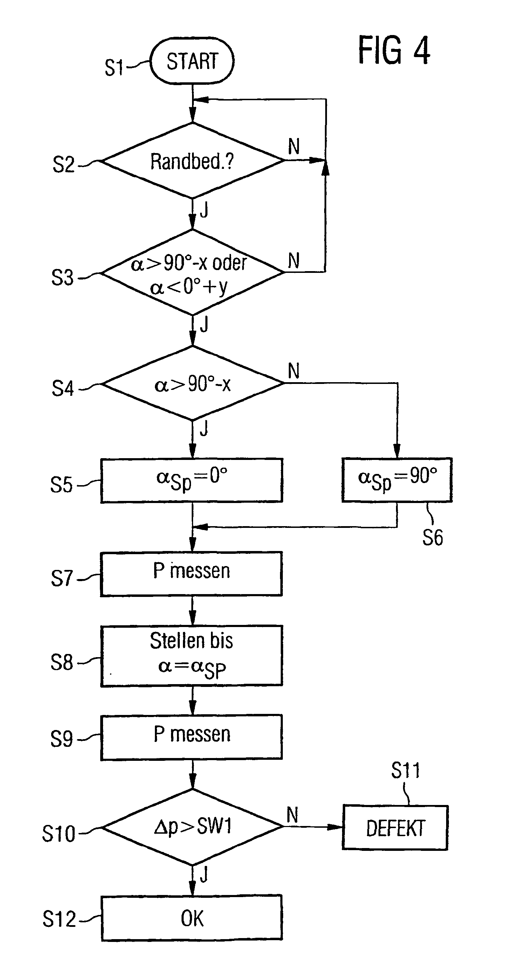

Das Diagnoseverfahren läuft in einer Ausbildung im Detail wie in Fig. 4 gezeigt ab, wobei die mit einem S beginnenden Bezugszeichen entsprechende Schritte des Verfahrens bezeichnen.

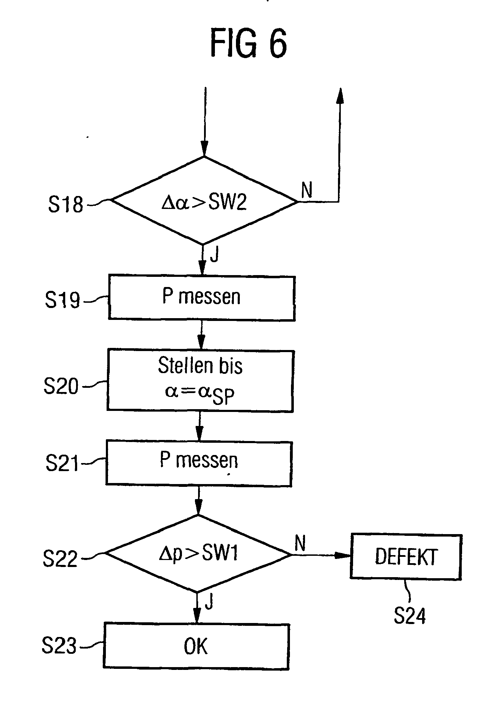

In Schritt S1 wird das Verfahren begonnen. In Schritt S2 wird geprüft, ob gewisse Randbedingungen erfüllt sind, wie dies erfolgt, wird später noch in Figur 5 erläutert.

Sind die Randbedingungen erfüllt (J-Verzweigung) wird in Schritt S3 geprüft, ob der Öffnungswinkel α₀ der Drallklappen 1 im Bereich der maximalen oder minimalen Öffnung liegt (x und y in Schritt S3 bezeichnen Werte nahe Null, die den Bereich bzw. Abstand festlegen innerhalb dessen sich der Öffnungswinkel bezogen auf die minimale oder maximale Öffnungen befinden muß). Ist dies der Fall (J-Verzweigung) wird in Schritt S4 geprüft, ob der Öffnungswinkel α₀ nahe der maximalen Öffnung ist,ansonsten wird vor Schritt S2 zurückgesprungen, da kein für die Diagnose ausreichender Verstellweg möglich ist, weil die Drallklappe sich in der Zwischenstellung befindet. Falls α nahe der maximalen Öffnung ist, wird als Sollwert αₛₚ für die nachfolgende Diagnoseverstellung die minimale Öffnung, z.B. 0°, gewählt. Ergab Schritt S4, daß der Öffnungswinkel nahe der minimalen Öffnung liegt, wird die maximale Öffnung, z.B. 90° als Sollwert αₛₚ in Schritt S6 gewählt.

Anschließend wird in Schritt S7 der Saugrohrdruck p gemessen. Daraufhin wird in Schritt S8 der Stellantrieb 4 betätigt, bis der von der Lagerückmeldung angezeigte Öffnungswinkel dem Sollwert α_{SP} entspricht. Liegt kein überkritischer Saugrohrdruck vor, wird gleichzeitig durch Zündungseingriff die Last konstant gehalten. Nun wird in Schritt S9 der Saugrohrdruck erneut gemessen. Ergibt die Abfrage in Schritt S10, daß die Differenz zwischen den in Schritt S7 und Schritt S9 gemessenen Saugrohrdrücken kleiner einem Schwellwert SW1 ist, wird in Schritt S11 ein Defekt des Stellantriebs bzw. der ihm zugeordneten Lagerückmeldung diagnostiziert und eine Signalmarkierung PORT_ERR gesetzt. Andernfalls (J-Verzweigung) wird in Schritt S12 die Funktionsfähigkeit der Verstellvorrichtung festgestellt. Der Schwellwert SW1 kann fix oder abhängig vom Verstellweg, d.h. von der Differenz |α₀ - αₛₚ| gewählt werden.

Die Abprüfung der Randbedingung in Schritt S2 ist in Figur 5 genauer dargestellt. Um sicherzustellen, daß ein Betriebsbereich vorliegt, bei dem der Verstellweg der Drallklappe einem Saugrohrdrucksprung zugeordnet werden kann, wird in Schritt S13 überprüft, ob Lambda-1-geregelter Betrieb vorliegt. Weiter wird in Schritt S14 abgeprüft, ob das Druckverhältnis P_{R} aus Saugrohrdruck und Umgebungsdruck kleiner 0,53 ist. Es kommt dabei nicht auf den Wert 0,53 an, sondern darauf, daß der Saugrohrdruck im überkritischen Bereich liegt. Bei 0,53 ist dies sicher der Fall, es sind aber je nach Ausbildung des Saugrohrs und der Druckmessungen auch andere Werte, beispielsweise zwischen 0,4 und 0,6, möglich. Weiter wird in Schritt S15 geprüft, ob die Drehzahl N der Brennkraftmaschine über einer Solldrehzahl N0 liegt. Schließlich wird in Schritt S16 überprüft, daß keine Signalmarkierung für einen Fehler in der Drallklappenbetätigung gesetzt ist, d.h. ob PORT_ERR ungleich 1 ist. Die Markierung wäre dann gesetzt, wenn eine vorherige Diagnose bereits einen Fehler ergeben hätte.

Die Ausgänge der Schritte S13 bis S16 werden in Schritt S17 UND-verknüpft. Ergibt dies einen positiven Ausgang (J-Verzweigung), d.h. sind alle Abfragen der Schritte S13 bis Schritt S16 positiv, sind die erforderlichen Randbedingungen in Schritt S2 erfüllt. Ansonsten ist dies nicht der Fall (N-Verzweigung in Schritt S2).

In einer weiteren Ausbildung des Verfahrens kann ein im normalen Betrieb der Brennkraftmaschine durch angeforderte Betätigung der Drallklappe ohnehin anfallender Verstellweg zur Diagnose ausgenutzt werden. Dazu wird in einem Schritt S18 überprüft, ob der angeforderte Verstellweg oder Verstellwinkel Δα größer einem Schwellwert SW2 ist. Ist dies der Fall, wird mit der Diagnose fortgefahren, ansonsten wird zu Diagnosebeginn zurückgesprungen. Der Schwellwert SW2 kann, wie SW1 auch, betriebsparameterabhängig gewählt werden, da sich z.B. die Drehzahl der Brennkraftmaschine auf den Zusammenhang zwischen Verstellweg und Drucksprung auswirkt. Ist die Abfrage in Schritt S18 positiv (J-Verzweigung) wird in einem Schritt S19 der Saugrohrdruck gemessen. Daraufhin wird in Schritt S20 der ohnehin angeforderte Sollwert αₛₚ für den Öffnungswinkel α eingestellt, indem der Stellantrieb 4 entsprechend betätigt wird, bis sein Lagerückmeldungssignal αₛₚ anzeigt. Daraufhin wird in Schritt S21 der Saugrohrdruck wiederum gemessen. Ergibt die Abfrage in Schritt S23, daß der aus Differenz der Drücke der Schritte 19 und S21 erhaltene Drucksprung Δₚ kleiner als der Schwellwert SW1 ist, wird in Schritt S24 ein Defekt diagnostiziert und die Signalmarkierung PORT_ERR im Schritt S16 gesetzt. Andernfalls wird in Schritt S23 die Anlage als funktionsfähig erkannt.

## Patentansprüche

1. Verfahren zur Diagnose der Betätigung einer Drallklappe, die stromab einer Drosselklappe im Ansaugtrakt einer Brennkraftmaschine sitzt, bei dem im Lambda-1-geregelten Betrieb innerhalb eines überkritischen Betriebsbereiches des Saugrohrdruckes im Ansaugtrakt stromab der Drosselklappe die Drallklappe um einen bestimmten Verstellweg betätigt wird und bei Ausbleiben eines bestimmten, vom Verstellweg abhängenden sprungartigen Druckänderung im Ansaugtrakt stromab der Drosselklappe ein Defekt der Drallklappenbetätigung diagnostiziert wird.

2. Verfahren nach Anspruch 1, **dadurch gekennzeichnet, daß** zur Diagnose einer die Drallklappe betätigenden Verstellvorrichtung, die ein die Position der Drallklappe anzeigendes Lagesignal abgibt, folgende Schritte durchgeführt werden::
a) Verstellen der Drallklappe um den Verstellweg bis das Lagesignal eine bestimmte Endposition anzeigt,
b) Erfassen des Saugrohrdrucks zwischen Drallklappe und Drosselklappe vor und nach dem Verstellen,
c) Bilden der Differenz aus den erfaßten Saugrohrdrücken und
d) Diagnostizieren eines Defektes der Verstellvorrichtung, wenn die Differenz einen bestimmten Schwellwert unterschreitet.

3. Verfahren nach Anspruch 2,
**dadurch gekennzeichnet, daß** die bestimmte Endlage so festgelegt wird, daß die Drallklappe in Schritt a) über einen maximalen Weg verstellt wird.

4. Verfahren nach Anspruch 3,
**dadurch gekennzeichnet, daß** vor Schritt a) die aktuelle Position der Drallklappe ermittelt wird.

5. Verfahren nach einem der vorherigen Ansprüche,
**dadurch gekennzeichnet, daß** bei einem im Betrieb der Brennkraftmaschine angeforderten Drallklappenverstellvorgang der dabei angeforderte Verstellweg verwendet wird.

6. Verfahren nach einem der vorherigen Ansprüche,
**dadurch gekennzeichnet, daß** die Drallklappe zweimal betätigt wird, so daß sie danach wieder in der Ausgangsposition vor der ersten Betätigung ist.

7. Verfahren nach einem der vorherigen Ansprüche,
**dadurch gekennzeichnet, daß** bei einer Brennkraftmaschine mit Abgasrückführung die Abgasrückführrate konstant, vorzugsweise bei oder auf Null, gehalten wird.

8. Verfahren nach einem der vorherigen Ansprüche,
**dadurch gekennzeichnet, daß** das Verfahren nur oberhalb einer bestimmten Mindestdrehzahl der Brennkraftmaschine durchgeführt wird.

9. Verfahren nach einem der vorherigen Ansprüche,
**dadurch gekennzeichnet, daß** das Verfahren nur durchgeführt wird, wenn sich die Drallklappe innerhalb eines gewissen Bereiches nahe ihrer minimalen oder maximalen Öffnung befindet.

## Revendications

1. Procédé permettant le diagnostic de l'actionnement d'un papillon de turbulence situé en aval d'un papillon des gaz, dans le collecteur d'aspiration d'un moteur à combustion interne, procédé dans lequel, dans un fonctionnement à régulation lambda 1 et à l'intérieur d'une plage de fonctionnement surcritique de la pression du tuyau d'aspiration dans le collecteur d'aspiration en aval du papillon des gaz, le papillon de turbulence est actionné de manière à parcourir une distance de réglage donnée et dans lequel une défaillance de l'actionnement du papillon de turbulence est diagnostiquée si un changement brusque de pression d'une ampleur donnée dépendant de la distance de réglage ne se produit pas dans le collecteur d'aspiration en aval du papillon des gaz.

2. Procédé selon la revendication 1, **caractérisé en ce que** les étapes suivantes sont réalisées pour permettre le diagnostic d'un dispositif de réglage actionnant le papillon de turbulence, lequel émet un signal de position indiquant la position du papillon de turbulence :
a) réglage du papillon de turbulence de manière à lui faire parcourir la distance de réglage jusqu'à ce que le signal de position indique une position finale donnée,
b) saisie de la pression du tuyau d'aspiration entre le papillon de turbulence et le papillon des gaz avant et après le réglage,
c) formation de la différence entre les pressions saisies dans le tuyau d'aspiration et
d) diagnostic d'une défaillance du dispositif de réglage lorsque la différence n'atteint pas une valeur de seuil donnée.

3. Procédé selon la revendication 2,
**caractérisé en ce que** la position finale donnée est déterminée de telle sorte que, pendant le réglage de l'étape a), le papillon de turbulence doit parcourir une distance maximale.

4. Procédé selon la revendication 3,
**caractérisé en ce que** la position actuelle du papillon de turbulence est déterminée avant l'étape a).

5. Procédé selon l'une des revendications précédentes,
**caractérisé en ce que** la distance de réglage utilisée est celle qui est sollicitée lors d'une opération de réglage du papillon de turbulence durant le fonctionnement du moteur à combustion interne.

6. Procédé selon l'une des revendications précédentes,
**caractérisé en ce que** le papillon de turbulence est actionné par deux fois de manière à reprendre ensuite la position initiale qu'elle occupait avant le premier actionnement.

7. Procédé selon l'une des revendications précédentes,
**caractérisé en ce que**, dans le cas d'un moteur à combustion interne avec recyclage des gaz d'échappement, le taux de recyclage des gaz d'échappement est maintenu constant, de préférence proche de zéro ou égal à zéro.

8. Procédé selon l'une des revendications précédentes,
**caractérisé en ce que** le procédé est réalisé uniquement au-dessus d'une vitesse minimum donnée du moteur à combustion interne.

9. Procédé selon l'une des revendications précédentes,
**caractérisé en ce que** le procédé est réalisé uniquement lorsque le papillon de turbulence se trouve à l'intérieur d'une zone donnée proche de son ouverture minimale ou de son ouverture maximale.

## Claims

1. Method for diagnosing the activation of a swirl control valve which is seated downstream of a throttle valve in the intake tract of an internal combustion engine and in which the swirl control valve is actuated by a predefined adjustment travel within a supercritical operating range of the intake manifold pressure in the intake tract downstream of the throttle valve during lambda-1-controlled operation, and if a specific step-like change in pressure dependent on the adjustment travel does not take place in the intake tract downstream of the throttle valve, a defect is diagnosed in the activation of the throttle valve.

2. Method according to Claim 1, **characterized in that** the following steps are carried out in order to diagnose an adjustment device which activates the swirl control valve and which outputs a position signal which indicates the position of the swirl control valve:
a) adjustment of the swirl control valve by the adjustment travel until the position signal indicates a specific limit position,
b) sensing of the intake manifold pressure between the swirl control valve and throttle valve upstream and downstream of the adjustment,
c) formation of the difference between the sensed intake manifold pressures, and
d) diagnosis of a defect in the adjustment device for different drops below a specific threshold value.

3. Method according to Claim 2, **characterized in that** the specific limit position is specified in such a way that the throttle valve in step a) is adjusted over a maximum travel.

4. Method according to Claim 3, **characterized in that** before step a) the current position of the throttle valve is determined.

5. Method according to one of the preceding claims, **characterized in that** during a throttle valve adjustment operation requested during the operation of the internal combustion engine the adjustment travel which is requested **in that** case is used.

6. Method according to one of the preceding claims, **characterized in that** the swirl control valve is actuated twice so that afterwards it is then in the output position again before the first activation.

7. Method according to one of the preceding claims, **characterized in that** in an internal combustion engine with exhaust-gas feedback the exhaust-gas feedback rate is kept constant, preferably close to or at zero.

8. Method according to one of the preceding claims, **characterized in that** the method is carried out only above a specific minimum rotational speed of the internal combustion engine.

9. Method according to one of the preceding claims, **characterized in that** the method is carried out only if the swirl control valve is located within a specific range near to its minimum or maximum degree of opening.
